(19) **Europäisches Patentamt / European Patent Office / Office européen des brevets**

(11) **EP 4 079 701 B1**

(12) **FASCICULE DE BREVET EUROPEEN**

(45) Date de publication et mention de la délivrance du brevet:
**01.01.2025  Bulletin 2025/01**

(21) Numéro de dépôt: **22168778.3**

(22) Date de dépôt: **19.04.2022**

(51) Classification Internationale des Brevets (IPC):
*C04B 35/26* (2006.01)      *C04B 35/626* (2006.01)
*H01P 1/11* (2006.01)       *H01P 1/19* (2006.01)
*H01R 13/7193* (2011.01)    *H01F 1/34* (2006.01)

(52) Classification Coopérative des Brevets (CPC):
**C04B 35/2616; C04B 35/2625; C04B 35/265; C04B 35/6262;** C04B 2235/3201; C04B 2235/3203; C04B 2235/3206; C04B 2235/3208; C04B 2235/3217; C04B 2235/3232; C04B 2235/3239; C04B 2235/3262; C04B 2235/3275; C04B 2235/3279; C04B 2235/3281;      (Cont.)

(54) **MATERIAU FERRITE DE LITHIUM FAIBLES PERTES POUR DISPOSITIF HYPERFREQUENCE COMMANDABLE DE PUISSANCE**

VERLUSTARMES LITHIUMFERRITMATERIAL FÜR LEISTUNGSSTEUERBARE HOCHFREQUENZGERÄTE

LOW-LOSS LITHIUM FERRITE MATERIAL FOR POWER-CONTROLLABLE HYPERFREQUENCY DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.04.2021  FR 2104020**

(43) Date de publication de la demande:
**26.10.2022  Bulletin 2022/43**

(73) Titulaire: **THALES**
**92400 Courbevoie (FR)**

(72) Inventeurs:
 • **LEBOURGEOIS, Richard**
   **91767 PALAISEAU (FR)**
 • **SAIED, Jaafar**
   **91767 PALAISEAU (FR)**
 • **LEJAY, Benoît**
   **31860 LABARTHE/LEZE (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**EP-A1- 2 090 555      CN-A- 109 437 879**
**CN-A- 110 903 083      FR-A1- 2 426 031**
**FR-A1- 2 952 752      US-A1- 2009 057 606**

EP 4 079 701 B1

(52) Classification Coopérative des Brevets (CPC):
(Cont.)
C04B 2235/3284; C04B 2235/3298;
C04B 2235/3409; C04B 2235/3418;
C04B 2235/447; C04B 2235/6583; C04B 2235/763;
C04B 2235/77; C04B 2235/96

**Description**

Le domaine de l'invention est celui des matériaux ferrites pour l'utilisation dans des commutateurs ou des déphaseurs de puissance dédiés aux télécommunications et notamment aux télécommunications spatiales.

Les commutateurs et les déphaseurs à ferrite sont des dispositifs commandables par impulsions de courants. Ces dispositifs sont constitués d'un noyau de ferrite traversé par un fil conducteur, le tout inséré dans une jonction Y en guide d'onde trois ports pour le commutateur ou dans un simple guide d'ondes pour le déphaseur.

On peut citer selon les applications visées des matrices de commutateurs rapides et des déphaseurs pour les nouvelles charges utiles VHTS *("Very High Throughput Satellite ")* haut débit utilisant la technique de saut de faisceaux couramment dénommée technique du "beam hopping", des matrices de commutateurs rapides et des déphaseurs pour les radars d'observation pour la redondance d'équipement: LNA (amplificateur faible bruit, ou "Low Noise Amplifier") redondé, TWTA ("Travelling Wave Tube Amplifiers") redondé ....., pour le BFN ("Beam Forming Network*")*, ou bien encore pour effectuer de l'interférométrie spatiale.

On assiste aujourd'hui à une augmentation des densités de puissance qui se traduit par des échauffements rédhibitoires ou des dysfonctionnements dans les équipements. La tenue en puissance du dispositif dépend principalement de celle du ferrite qui elle-même dépend de la composition chimique du matériau ainsi que de sa microstructure. Les ferrites hyperfréquences disponibles commercialement ne répondent pas à ces nouvelles exigences.

La montée en puissance des dispositifs commandables comme les commutateurs ou les déphaseurs à ferrite conduit à des échauffements qu'il devient difficile de gérer. Il devient nécessaire de trouver des ferrites présentant des seuils de non linéarité plus élevés tout en conservant des commandabilités aisées.

L'objet de la présente invention porte sur de nouveaux matériaux ferrites pour notamment l'utilisation dans des commutateurs ou des déphaseurs hyperfréquences de puissance dédiés aux télécommunications spatiales. Il s'agit d'une famille de compositions de ferrites de lithium présentant de meilleures tenues en puissance tout en conservant une commandabilité aisée.

Il existe deux grandes familles de ferrite, les ferrites de structure spinelle (Mg-Mn, Ni-Zn, Li-Zn) et les ferrites de structure grenat obtenus à partir du grenat d'yttrium-fer (YIG) substitué. Traditionnellement, les ferrites Mg-Mn et Ni-Zn sont abondamment utilisés dans les applications micro-ondes pour leurs faibles pertes diélectriques et leur large gamme d'aimantations contrôlables à l'aide de substitutions. Les ferrites Mg-Mn présentent des aimantations à saturation faibles (< 3000G) alors que les ferrites Ni-Zn sont utilisés pour des applications requérant de plus fortes aimantations à saturation (entre 3000 et 5000 G). Cependant, ces ferrites ont des températures de Curie faibles les rendant instables en fonction de la température et leur tenue en puissance est limitée. Ils présentent de faibles pertes diélectriques et des cycles d'hystérésis rectangulaires ce qui est un atout pour les dispositifs commandables par impulsions de courant.

Le choix du ferrite pour une application donnée est guidé préalablement par l'aimantation à saturation. Pour limiter les pertes dites « à champ faible », on sélectionne dans un premier temps les ferrites dont l'aimantation à saturation vérifie la relation $\gamma M_s < 0.7.f_{min}$ dans laquelle $f_{min}$ est la fréquence minimale de fonctionnement et $\gamma$ est le rapport gyromagnétique.

Par exemple, si $f_{min}$ = 8 GHz (fonctionnement en bande X), on aura $M_s$ < 2000 G et si $f_{min}$ = 18 GHz (fonctionnement en bande Ka), on aura $M_s$ < 4500 G.

L'aimantation des ferrites grenat est limitée à 2000 G ce qui en fait des matériaux de choix pour un fonctionnement en bande X ou en-deçà de cette bande mais ce qui les rend inutilisables pour les applications à hautes fréquences (15 à 50 GHz).

Pour un fonctionnement à plus haute fréquence, il est intéressant d'opter pour des ferrites spinelles dont l'aimantation à saturation peut atteindre 5000 G.

Typiquement, pour des applications à haute fréquence (> 15 GHz), le ferrite sélectionné doit présenter une aimantation d'au moins 3500 G. Comme expliqué précédemment, seuls les ferrites spinelles répondent à cette exigence.

Les ferrites proposés dans la présente invention sont des ferrites spinelles de Lithium. Ces ferrites possèdent une structure cristallographique de type cubique à faces centrées, possédant deux sites cristallographiques particuliers, les sites octaédriques et les sites tétraédriques. Le ferrite de Lithium de base a pour formule $Li_{0,5}Fe_{2,5}O_4$, dont la distribution des ions est $[Li_{0,5}Fe_{0,5}](Fe_2)O_4$, dans laquelle les symboles $[Li_{0,5}Fe_{0,5}]$ et $(Fe_2)$ indiquent respectivement les sites octaédriques et tétraédriques.

Le ferrite de lithium présente des propriétés particulières. Il s'agit d'un ferrite doux aux pertes diélectriques faibles. Sa température de Curie est de 670°C, et dans certaines conditions son cycle d'hystérésis est rectangulaire. L'aimantation à saturation du ferrite $Li_{0,5}Fe_{2,5}O_4$ est de 3700 G. Ses propriétés sont contrôlables par des substitutions judicieusement choisies. Les propriétés modifiables sont l'aimantation à saturation, la permittivité, la forme du cycle d'hystérésis ainsi que la tenue en puissance.

De manière générale, la tenue en puissance du ferrite augmente lorsque la taille des grains diminue et lorsqu'il contient des ions à comportement relaxant.

Le choix des substituants dépend de l'application du matériau. En effet pour des dispositifs commandables, les paramètres importants à considérer sont la tenue en puissance, les pertes diélectriques, les champs coercitifs, le cycle d'hystérésis qui doit être rectangulaire et la stabilité en fonction de la température. Les substitutions connues de l'état de l'art dans les ferrites de lithium pour hyperfréquences sont celles par le zinc, le titane, le manganèse, l'aluminium, le magnésium et le cobalt.

Il existe dans la littérature de nombreuses publications prouvant l'intérêt de chaque substitution :

**Les substitutions par le Ti$^{4+}$** permettent de réduire les pertes diélectriques et de diminuer (et donc contrôler) l'aimantation du ferrite, sans trop modifier les autres caractéristiques du ferrite. Il augmente néanmoins le champ coercitif. Le défaut du Ti$^{4+}$ est sa valence de +IV qu'il faut compenser avec d'autres substituants divalents ou par ajout d'ions Li$^+$ et de Mn$^{2+}$. Ceci a pour conséquence de diminuer la température de Curie.

**Les substitutions par le Mn$^{2+}$** permettent la diminution de la magnétostriction du ferrite. En effet l'ion manganèse a une constante de magnétostriction positive qui permet de compenser la magnétostriction négative du cristal hôte. L'ajout de Mn$^{2+}$ permet aussi de contrebalancer l'excès de charges apportées par le Ti$^{4+}$.

**Les substitutions par le Zn$^{2+}$** permettent d'augmenter l'aimantation à saturation. En effet, l'ion Zn$^{2+}$ venant se situer en site tétraédrique, il affaiblit l'aimantation du sous-réseau correspondant ce qui augmente l'aimantation totale. Il permet également une meilleure densification du matériau ce qui a pour conséquence de réduire le champ coercitif et d'augmenter l'aimantation rémanente. Certaines études ont montré l'intérêt de l'utilisation du zinc pour augmenter la tenue en puissance des ferrites en présence d'ion Co$^{2+}$.

**Les substitutions par le Co$^{2+}$** permettent d'augmenter la tenue en puissance du ferrite, par son caractère d'ion relaxant. La présence de cet ion atténue les effets non linéaires ce qui se traduit par une augmentation de la largeur de raie d'onde de spin $\Delta H_K$. De plus, L'ion Co$^{2+}$ a une constante d'anisotropie positive contrairement au cristal hôte de ferrite. Il existe donc une température de compensation à laquelle la constante d'anisotropie s'annule, ce qui permet une augmentation de la perméabilité du matériau.

**Les substitutions par le Mg$^{2+}$** permettent également d'améliorer la rectangularité des cycles d'hystérésis du ferrite et améliorer le rémanent. Par contre il n'améliore pas la tenue en puissance.

**Les substitutions par Al$^{3+}$** permettent, tout comme le Ti$^{4+}$, de diminuer l'aimantation à saturation du ferrite. Cependant l'ajout de cet ion augmente les pertes diélectriques et diminue la température de Curie.

Il est à noter que malgré l'intérêt que représente l'ajout de Co, pour augmenter la tenue en puissance des ferrites de lithium, l'augmentation du taux de cobalt dans le ferrite dégrade le cycle d'hystérésis en augmentant le champ coercitif mais surtout en diminuant l'aimantation rémanente. En conséquence, l'efficacité du ferrite diminue et sa commandabilité se complique.

Le document CN 109 437 879 A décrit un ferrite de lithium de structure spinelle contenant notamment du manganèse, du cobalt, du cuivre et du bismuth.

Le document FR 2 426 031 A1 divulgue un procédé pour préparer un ferrite de lithium de structure spinelle par ajout d'un agent de frittage constitué d'un mélange d'un composé de phosphore et d'un composé de vanadium ou de bismuth aux matières premières du ferrite.

Dans ce contexte, le Demandeur propose une nouvelle famille de ferrite de structure spinelle de type ferrite de lithium, présentant une bonne tenue en puissance grâce à des substitutions Co en association avec notamment du Cu. L'association du cuivre et du cobalt permet de prendre en considération les substitutions par le **Cu$^{2+}$** pertinentes pour diminuer la température de frittage et mieux contrôler la microstructure du ferrite sans dégrader ses performances et notamment le cycle d'hystérésis.

Le Demandeur propose de plus d'associer également des substitutions par le **Ni$^{2+}$** permettant d'améliorer la rectangularité des cycles d'hystérésis du ferrite tout en améliorant le rémanent (l'ion **Ni$^{2+}$** étant un ion relaxant, il améliore également la tenue en puissance) ainsi que l'ajout **de Bi$_2$O$_3$** permettant d'améliorer la densification du matériau tout en réduisant la porosité. En effet l'oxyde de bismuth est liquide à partir de 820°C et permet donc un frittage en phase liquide. Les ions **Bi$^{3+}$** n'entrent pas directement dans la structure du ferrite.

Plus précisément, l'invention a pour objet un matériau ferrite répondant à la formule chimique suivante :

(100-x) (Li$_a$ Mn$_b$ Ti$_c$ Zn$_d$ Co$_e$ Cu$_f$ Al$_g$ Ni$_h$ Mg$_i$ Fe$_j$ O$_{4+\gamma}$) + x (de fondant ou de mélange de fondants de Bi$_2$O$_3$ ou de V$_2$O$_5$ ou de B$_2$O$_3$ ou de CuO ou de CaO ou de Na$_2$O ou de SiO$_2$ ou de P$_2$O$_5$) avec x pourcentage molaire et $0 < x < 10$ avec :

$$-0.02 < \gamma < 0.02$$

$$0 < a \leq 0{,}5$$

$$0 < b \leq 0{,}2$$

$$0 < c \leq 0{,}1$$

$$0 \leq d \leq 0{,}25$$

$$0 < e \leq 0{,}05$$

$$0{,}01 \leq f \leq 0{,}2$$

$$0 \leq g \leq 0{,}1$$

$$0 \leq h < 0{,}1$$

$$0 \leq i < 0{,}1$$

$$0 < j < 2{,}4$$

Selon des variantes de l'invention, le fondant est du $Bi_2O_3$ et la proportion de $Bi_2O_3$ optimale est située entre 0.3 et 0.5% en poids.

La nouveauté réside en l'association du cuivre et du cobalt dans des proportions judicieusement déterminées et ce avec la présence éventuelle de nickel ou de celles éventuelles de tous les autres éléments permettant un ajustement précis des propriétés du ferrite.

L'invention a aussi pour objet un procédé de fabrication d'un matériau ferrite fritté comprenant :

- la pesée de matières premières;
- un premier broyage desdites matières premières;
- une étape de calcination (encore dénommée chamottage) desdites matières premières broyées permettant d'obtenir un matériau ferrite cru répondant à la formule chimique :

$$Li_a\, Mn_b\, Ti_c\, Zn_d\, Co_e\, Cu_f\, Al_g\, Ni_h\, Mg_i\, Fe_j\, O_{4+\gamma}$$

avec :

$$-0{.}02 < \gamma < 0{.}02$$

$$0 < a \leq 0{,}5$$

$$0 < b \leq 0{,}2$$

$$0 < c \leq 0{,}1$$

$$0 \leq d \leq 0{,}25$$

$$0 < e \leq 0{,}05$$

$$0.01 \leq f \leq 0,2$$

$$0 \leq g \leq 0,1$$

$$0 \leq h < 0,1$$

$$0 \leq i < 0,1$$

$$0 < j < 2,4$$

- l'ajout d'un fondant ou de mélange de fondants de $Bi_2O_3$ ou de $V_2O_5$ ou de $B_2O_3$ ou de $CuO$ ou de $CaO$ ou de $Na_2O$ ou de $SiO_2$ ou de $P_2O_5$ ;
- une opération de frittage.

L'invention a encore pour objet un commutateur comprenant un matériau ferrite fritté obtenu selon le procédé de fabrication d'un matériau ferrite fritté selon l'invention.

L'invention a encore pour objet un déphaseur comprenant un matériau ferrite fritté obtenu selon le procédé de fabrication d'un matériau ferrite fritté selon l'invention.

L'invention sera mieux comprise et d'autres avantages apparaitront à la lecture de la description qui va suivre donnée à titre non limitatif et grâce aux figures annexées parmi lesquelles :

[Fig 1] illustre l'évolution de la différence entre la puissance incidente et la puissance transmise en fonction de la puissance appliquée au dispositif de mesure pour différents ferrites de lithium présentant différents taux de cuivre ;

[Fig 2] illustre l'évolution de la différence entre la puissance incidente et la puissance transmise en fonction de la puissance appliquée au dispositif de mesure pour différents ferrites de lithium de l'art antérieur sans cuivre et un ferrite de l'invention comprenant du cobalt et du cuivre ;

[Fig 3] illustre des cycles d'aimantation B(H) pour des ferrites de lithium de l'art connu et un ferrite de lithium de l'invention ;

De manière générale, le matériau ferrite de l'invention répond à la formule chimique suivante :
$(100-x)$ $(Li_a$ $Mn_b$ $Ti_c$ $Zn_d$ $Co_e$ $Cu_f$ $Al_g$ $Ni_h$ $Mg_i$ $Fe_j$ $O_{4+\gamma})$ + x (de fondant ou de mélange de fondants de $Bi_2O_3$ ou de $V_2O_5$ ou de $B_2O_3$ ou de $CuO$ ou de $CaO$ ou de $Na_2O$ ou de $SiO_2$ ou de $P_2O_5$) avec x pourcentage molaire et $0 < x < 10$ avec :

$$-0.02 < \gamma < 0.02$$

$$0 < a \leq 0,5$$

$$0 < b \leq 0,2$$

$$0 < c \leq 0,1$$

$$0 \leq d \leq 0,25$$

$$0 < e \leq 0,05$$

$$0.01 \le f \le 0.2$$

$$0 \le g \le 0.1$$

$$0 \le h < 0.1$$

$$0 \le i < 0.1$$

$$0 < j < 2.4$$

La nouveauté de ces matériaux ferrites réside notamment dans la présence de Cuivre cumulé au Cobalt et préférentiellement également au Nickel. En effet, lorsque que le cuivre et le cobalt sont présents avec des pourcentages molaires respectifs f et e tels que $0.01 \le f \le 0.2$ et $0 < e \le 0.05$, cela permet de diminuer la température de frittage et mieux contrôler la microstructure du ferrite sans dégrader ses performances (notamment le cycle d'hystérésis).

Pour rendre compte de l'intérêt des différentes substitutions, différents exemples de compositions ont été étudiées :

**Ferrite R$_0$:** $Li_{0,4925} \, Mn_{0,035} \, Ti_{0,035} \, Zn_{0,05} \, Fe_{2,3875} \, O_4$

**Ferrite A :** $Li_{0,490} \, Mn_{0,035} \, Ti_{0,035} \, Zn_{0,05} \, Co_{0,006} \, Fe_{2,385} \, O_4$

**Ferrite B :** $Li_{0,465} \, Mn_{0,035} \, Ti_{0,035} \, Zn_{0,05} \, Co_{0,006} \, Cu_{0,05} \, Fe_{2,36} \, O_4$

**Ferrite C :** $Li_{0,4395} \, Mn_{0,035} \, Ti_{0,035} \, Zn_{0,05} \, Co_{0,006} \, Cu_{0,1} \, Fe_{2,3345} \, O_4$

**Ferrite D :** $Li_{0,4625} \, Mn_{0,035} \, Ti_{0,035} \, Zn_{0,05} \, Co_{0,01} \, Cu_{0,05} \, Fe_{2,3575} \, O_4$

Ces ferrites ont été testés préalablement sans ajout du fondant $Bi_2O_3$ (même si le frittage est moins bon, le fondant augmentant notamment la densité du ferrite). Le Demandeur a étudié en résumé l'influence des substitutions par le cobalt et le cuivre en partant d'une formulation déjà optimisée pour un fonctionnement au-delà de 17 GHz, $Li_{0,4925}$ $Mn_{0,035} \, Ti_{0,035} \, Zn_{0,05} \, Fe_{2,3875} \, O_4$ (ref. **R$_0$**). Il est à noter que ces conclusions seraient les mêmes avec l'ajout d'un fondant de $Bi_2O_3$. En particulier, le Demandeur a comparé la tenue en puissance à l'aide d'une mesure développée spécifiquement au laboratoire comme explicité ci-après.

Dans un fonctionnement en hyperfréquence, les matériaux magnétiques présentent des pertes d'insertion qui ont des origines magnétiques et diélectriques.

Les pertes diélectriques sont décrites par le facteur de pertes diélectriques $\tan\delta_\varepsilon$ qui est mesuré classiquement vers 10 GHz. A bas niveau de puissance, les pertes magnétiques sont décrites par le facteur de pertes magnétiques $\tan\delta_\mu$ qui peut être obtenu en mesurant la perméabilité initiale complexe du ferrite.

Lorsque des champs magnétiques hyperfréquences élevés sont appliqués, il apparaît des phénomènes non linéaires donnant lieu à des pertes magnétiques supplémentaires, qui apparaissent à partir d'un champ appliqué $H_{appl}$ appelé le champ critique $h_c$. Ce phénomène non linéaire est lié à l'apparition d'ondes de spins. En effet, les spins porteurs de moments magnétiques ne restent plus parallèles entre eux dans leur mouvement de rotation. Le champ critique $h_c$ dépend du champ statique appliqué. Celui-ci passe par une valeur minimale pour un champ appelé champ subsidiaire $H_{sub}$, puis augmente pour se rapprocher d'un champ limite $H_{lim}$. Pour un ferrite sphérique, on peut écrire l'équation suivante :

$$(h_c)_{lim} = \Delta H_k \frac{1 - \omega_0/\omega}{1 - \dfrac{\omega_M}{2\omega} + \sqrt{1 + \dfrac{\omega_M^2}{4\omega^2}}} \frac{2\omega}{\omega_M}$$

dans laquelle $\omega$ est la pulsation, $\omega_0 = \gamma \, H_{appl}$ ; $\omega_M = \gamma \, M_s$ et $\Delta H_k$ est la largeur de raie d'ondes de spins. Une formule approximée permet d'écrire :

$$(h_c)_{lim} = 0,5 \, \Delta H_k \, \frac{\omega}{\omega_M}$$

Ainsi en travaillant à haut niveau de puissance hyperfréquence, des pertes supplémentaires peuvent apparaître. Pour contrer ce problème, il faut accroître $\Delta H_k$ (pour augmenter le champ critique $h_c$), $\Delta H_k$ dépendant de deux facteurs : la substitution par des ions relaxants et la taille des grains.

La solution proposée pour accroître $\Delta H_k$ peut consister en l'introduction dans la composition du matériau d'ions magnétiques dits relaxants, qui viennent amortir le mouvement des spins. Il a été montré dans la littérature que l'ajout de faibles quantités d'ions $Co^{2+}$ augmentait le facteur $\Delta H_k$. Cependant l'ajout d'ions Cobalt augmente également les pertes d'insertion et dégrade le cycle d'hystérésis. C'est pourquoi, selon la présente invention, pour répondre au besoin de forte tenue en puissance, de nouvelles formulations avec des taux plus élevés de substitution par le cobalt en association avec le cuivre ont été étudiées (par rapport à ce qui est décrit dans la littérature, soit typiquement 0.05 ion $Co^{2+}$ par formule).

Pour déterminer la valeur de $\Delta H_k$ du ferrite, une méthode de mesure a été proposée par Ulrich Hoeppe ("Smart measurement setup for spin-wave linewidth $\Delta Hk$").Magnetics, IEEE Transactions on , vol.38, no.5, pp.3126-3128, Sep 2002. Selon cette mesure, le but est de détecter la non-linéarité dans le matériau à partir d'un certain niveau de puissance. Pour observer ce seuil de non-linéarité, une bille de ferrite d'un diamètre de 2mm est placée au centre d'un résonateur en saphir dont les pertes diélectriques sont faibles afin de concentrer le signal hyperfréquence sur la bille. Le résonateur est placé dans une cavité qui elle-même est placée dans un champ magnétique contrôlable. Un signal hyperfréquence pulsé est émis par un synthétiseur et amplifié par un amplificateur adapté. Les puissances incidentes, réfléchies et transmises sont relevées grâce à des diodes placées sur des coupleurs directionnels. Un oscilloscope permet d'afficher les impulsions hyperfréquences ainsi que les déformations liées aux effets non linéaires.

Néanmoins cette méthode se montre limitée pour des matériaux aux forts $\Delta H_k$ (> 10 Oe). Une autre méthode est donc proposée, tout en gardant le même montage de mesure. La différence entre le signal incident i et le signal transmis t (donc i-t) est tracée en fonction de la puissance délivrée par le synthétiseur et l'amplificateur pour différents champs statiques appliqués. Une augmentation importante de i-t en fonction de la puissance du signal hyperfréquence envoyée atteste d'un changement de régime. Sur un tel graphique, le changement de pente permet de se rendre compte de l'apparition des effets non-linéaires.

L'augmentation du taux de Cobalt dans la formulation du ferrite permet de décaler le changement de pente vers les hautes puissances délivrées par le synthétiseur + amplificateur (jusqu'à 52 dbm, 150W en signal pulsé). Cependant, L'augmentation du taux de Cobalt entraine également une augmentation du champ coercitif ce qui dégrade la commandabilité.

Un autre moyen d'augmenter la tenue en puissance des ferrites, est de contrôler la microstructure du matériau. La microstructure d'une céramique concerne la taille des grains, l'homogénéité de la taille des mêmes grains et la qualité des joints de grains.

La taille des grains dépend principalement de la température de frittage. Pour des ferrites destinés à être utilisés dans des dispositifs de puissance, la microstructure doit être fine et homogène. La solution de la présente invention propose d'incorporer des substitutions par des ions de Cuivre. Dans la littérature, il a été montré que le cuivre a pour rôle de diminuer la température de frittage tout en augmentant l'homogénéité de la taille des grains des ferrites.

Pour rendre compte de cet effet, la caractérisation des ferrites **A, B** et **C** a permis de justifier l'effet de l'association du cuivre et du cobalt sur les matériaux ferrites concernés.

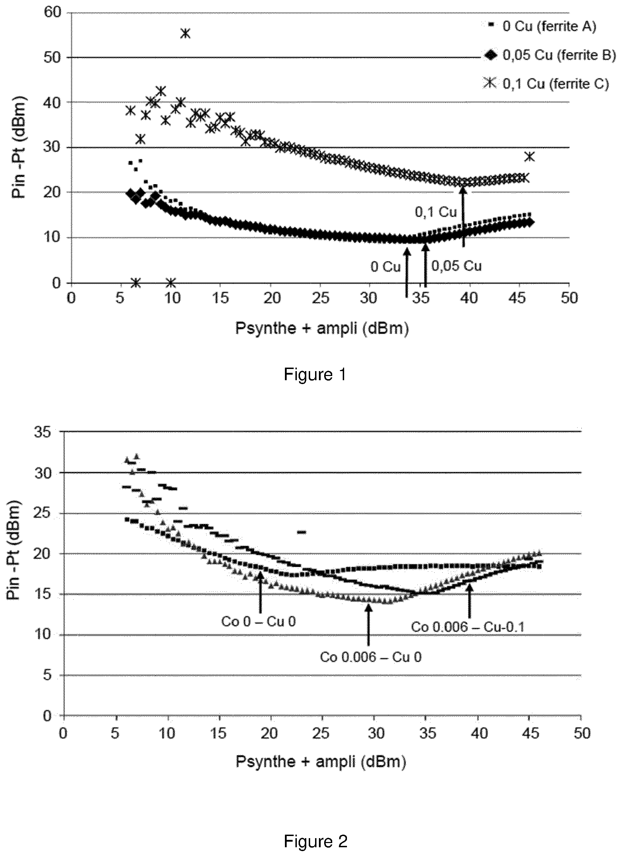

La figure 1 illustre la différence entre le signal incident i et le signal transmis t (donc i-t) en fonction de la puissance délivrée par le synthétiseur et l'amplificateur pour différents champs statiques et permet de comparer la tenue en puissance des trois ferrites mentionnés, à taux fixe d'ions $Co^{2+}$ de 0.006. La mesure montre une augmentation de la tenue en puissance avec le taux de $Cu^{2+}$ dans la formule du ferrite. En effet, le changement de pente (désigné par des flèches) qui illustre la tenue en puissance du matériau est décalé vers les plus hautes puissances incidentes (que l'on ajuste grâce au synthétiseur) lorsque le taux d'ions cuivre augmente. La microstructure plus fine et plus homogène des ferrites **B** et **C** contribue à cette amélioration. Il est noté que la caractérisation des ferrites A, B et C est donné à titre d'exemple. Les inventeurs ont trouvé que lorsque que le cuivre et le cobalt sont présents avec des pourcentages molaires respectifs f et e tels que $0.01 \leq f \leq 0,2$ et $0 < e \leq 0,05$, une augmentation de la tenue en puissance avec le taux de $Cu^{2+}$ est obtenue. Lorsque f < 0,01, le taux de cuivre est trop faible pour avoir un impact sur la microstructure et donc sur la tenue en puissance. De plus, lorsque f > 0,2, la croissance cristalline devient difficile à contrôler et on observe de nombreux défauts à l'intérieur des grains qui conduisent à une dégradation des propriétés électromagnétique.

La figure 2 compare la tenue en puissance de 3 ferrites, l'un sans substitution Co-Cu (Co : taux 0 - Cu : taux 0), le second substitué par le Co (Cu : taux 0 - Co : taux 0.006) et le troisième substitué par le cobalt et le cuivre (Co :

taux 0.006 - Cu : taux 0.1). On constate que le seuil de non-linéarité augmente pour le ferrite substitué par le cobalt et à nouveau pour le ferrite substitué conjointement par le cobalt et le cuivre.

Il est noté que, bien que la figure 2 étudie des ferrites tels que Co : taux 0 - Cu : taux 0, Cu : taux 0 - Co : taux 0.006 et Co : taux 0.006 - Cu : taux 0.1, ces ferrites sont données à titre d'exemple. Les inventeurs ont trouvé que des pourcentages molaires respectifs f et e pour le cuivre et le cobalt tels que $0.01 \leq f \leq 0,2$ et $0 < e \leq 0,05$ permettent d'optimiser le seuil de non-linéarité. De manière générale, il a été trouvé que plus on augmente le taux de cobalt, plus le seuil augmente.

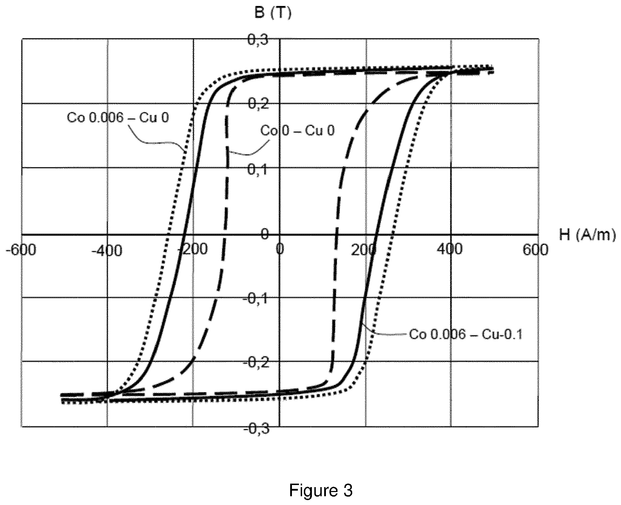

Une autre propriété importante pour les dispositifs commandables que l'on cherche à améliorer concerne le cycle d'hystérésis B(H). Il est rappelé que le principal critère de qualité est l'induction rémanente obtenue pour un champ magnétique maximal appliqué. La figure 3 compare les cycles d'aimantation B(H) en fonction du champ H . On constate que l'introduction du cobalt augmente le champ coercitif sans dégrader l'induction rémanente tout comme le cuivre, par rapport à un ferrite sans cobalt. Cependant, il a été observé que, lorsque le taux de cobalt augmente de façon importante, le cycle n'est plus rectangulaire et le ferrite n'est plus commandable. le cuivre permet de compenser ces effets indésirables. L'ajout du cuivre permet de compenser ces effets indésirables. Cependant, comme indiqué ci-dessus, lorsque le taux de cuivre f est tel que f > 0,2, on observe des défauts dans les grains du ferrite, conduisant à une augmentation du champ coercitif. Ainsi, il a été observé que les taux $0.01 \leq f \leq 0,2$ et $0 < e \leq 0,05$ permettent d'optimiser les propriétés des ferrites.

Pour compléter les caractérisations décrites ci-dessus, le Demandeur a mesuré la densité, l'aimantation à saturation, la permittivité et les pertes diélectriques à 9.2 GHz. Le tableau ci-dessous résume les résultats obtenus :

[Table 1]

| Ferrite | Aimantation (Gauss) | Densité (g/cm³) | $\tan\delta_\varepsilon$ | E' | $\Delta H_k$ (Oe) |
|---------|---------------------|-----------------|--------------------------|------|-------------------|
| R0 | 3700 | 4.6 | $5.0 \times 10^{-4}$ | 16.0 | 2,5 |
| A | 3720 | 4.65 | $4.4 \times 10^{-4}$ | 16.4 | 7 |
| B | 3730 | 4.65 | $4.8 \times 10^{-4}$ | 16.0 | 12 |
| C | 3840 | 4.75 | $5.8 \times 10^{-4}$ | 15.9 | 16,5 |
| D | 3900 | 4.68 | $5.9 \times 10^{-4}$ | 15.8 | 18 |

Il ressort ainsi que les autres propriétés (aimantation, densité et permittivité) ne sont pratiquement pas modifiées alors que la tenue en puissance ($\Delta H_k$) est améliorée. Il a été observé que des pourcentages molaires respectifs f et e pour le cuivre et le cobalt tels que $0.01 \leq f \leq 0,2$ et $0 < e \leq 0,05$ permettent de conserver une aimantation, densité et permittivité stable, tout en améliorant tenue en puissance. En particulier, lorsque le taux de cuivre est inférieur à 0.01, le matériau ferrite présente une mauvaise tenue en puissance, et lorsque le taux de cuivre est supérieur à 0.2, le le matériau ferrite présente des défauts dans les grains. De plus, lorsque le taux de cobalt est nul, matériau ferrite présente une mauvaise tenue en puissance, et le taux de cobalt est supérieur à 0.05, le matériau ferrite présente une mauvaise commandabilité.

La présente invention propose ainsi de nouveaux ferrites présentant des tenues en puissance améliorées tout en restant facilement commandables. Ces nouveaux ferrites permettent la réalisation de commutateurs et de déphaseurs pouvant fonctionner aux niveaux de puissance requis dans les futurs équipements de télécommunications.

La technique de fabrication de ces nouveaux ferrites est conventionnelle. Elle consiste à mélanger et broyer des matières premières se présentant sous forme de poudres puis à effectuer des traitements thermiques à haute température dans des fours électriques. Elle est basée sur la technologie céramique qui est utilisée depuis de nombreuses années dans le monde industriel.

Ces matériaux sont réalisés selon un procédé classique de synthèse céramique. Les différentes étapes sont rappelées ci-dessous :

- la pesée des matières premières;

- le broyage du mélange préalablement obtenu ;

- une étape de calcination encore appelée chamottage ayant pour but de synthétiser la phase spinelle sous forme de poudre et d'obtenir une poudre de matériau ferrite dit cru ;

- une seconde étape de broyage ;

- l'introduction d'un ajout de fondant (préférentiellement oxyde de bismuth) a lieu sur la phase calcinée (phase spinelle formée par traitement thermique). Elle peut être ajoutée à la phase calcinée grâce à un mélangeur (mélangeur à pales, attritor, jarre ...) ou au moment du second broyage. Après cet ajout, les étapes classiques de mise en forme et de frittage sont réalisées :

- la mise en forme réalisée classiquement par pressage; tous les autres moyens de mise en forme de poudre céramique peuvent être utilisées, comme par exemple le coulage en bande, le frittage sous charge, le frittage flash ou encore les techniques d'impression 3D destinées aux matériaux céramiques.

- le frittage à plus haute température de la poudre chamottée et rebroyée a pour but de densifier la céramique tout en lui conférant la forme souhaitée.

Le premier et le second broyage sont avantageusement effectués en milieu humide (aqueux).

Le frittage de la poudre rebroyée est avantageusement effectué sous air ou sous oxygène.

Les opérations de broyage sont avantageusement effectuées avec un broyeur à boulets et/ou par attrition.

Les applications industrielles ciblées peuvent notamment concerner les dispositifs commandables que l'on trouve dans les équipements de télécommunications spatiales. On peut citer en particulier :

- des matrices de commutateurs rapides et déphaseur pour les nouvelles charges utiles VHTS haut débit utilisant la technique du *"beam hopping"*,

- des matrices de commutateurs rapides et déphaseur pour les radars d'observation,

- des matrices de commutateurs rapides et déphaseur pour la redondance d'équipement : LNA redondé, TWTA redondé .....,

- des matrices de commutateurs rapides et déphaseur pour BFN;

- l'interférométrie spatiale.

**Revendications**

1. Matériau ferrite **caractérisé en ce qu'**il répond à la formule chimique suivante :
(100-x) (Li$_a$ Mn$_b$ Ti$_c$ Zn$_d$ Co$_e$ Cu$_f$ Al$_g$ Ni$_h$ Mg$_i$ Fe$_j$ O$_{4+\gamma}$) + x (de fondant ou de mélange de fondants de Bi$_2$O$_3$ ou de V$_2$O$_5$ ou de B$_2$O$_3$ ou de CuO ou de CaO ou de Na$_2$O ou de SiO$_2$ ou de P$_2$O$_5$) avec x pourcentage molaire et 0 < x < 10 avec :

$$-0.02 < \gamma < 0.02$$

$$0 < a \leqslant 0{,}5$$

$$0 < b \leqslant 0{,}2$$

$$0 < c \leqslant 0{,}1$$

$$0 \leqslant d \leqslant 0{,}25$$

$$0 < e \leqslant 0{,}05$$

$$0{,}01 \leqslant f \leqslant 0{,}2$$

$$0 \leqslant g \leqslant 0,1$$

$$0 \leqslant h < 0,1$$

$$0 \leqslant i < 0,1$$

$$0 < j < 2,4$$

2. Matériau ferrite selon la revendication 1 dans lequel le fondant est du $Bi_2O_3$ et la proportion de $Bi_2O_3$ est située entre 0.3 et 0.5% en poids.

3. Procédé de fabrication d'un matériau ferrite fritté comprenant :

    - la pesée de matières premières;
    - un premier broyage desdites matières premières;
    - une étape de calcination desdites matières premières broyées permettant d'obtenir un matériau ferrite cru répondant à la formule chimique :

$$Li_a\, Mn_b\, Ti_c\, Zn_d\, Co_e\, Cu_f\, Al_g\, Ni_h\, Mg_i\, Fe_j\, O_{4+\gamma}$$

avec :

$$-0.02 < \gamma < 0.02$$

$$0 < a \leq 0,5$$

$$0 < b \leq 0,2$$

$$0 < c \leq 0,1$$

$$0 \leq d \leq 0,25$$

$$0 < e \leq 0,05$$

$$0,01 \leq f \leq 0,2$$

$$0 \leq g \leq 0,1$$

$$0 \leq h < 0,1$$

$$0 \leq i < 0,1$$

$$0 < j < 2,4$$

- l'ajout d'un fondant ou de mélange de fondants de $Bi_2O_3$ ou de $V_2O_5$ ou de $B_2O_3$ ou de CuO ou de CaO, ou de $Na_2O$, ou de $SiO_2$ ou de $P_2O_5$ ;
- une opération de frittage.

4. Commutateur comprenant un matériau ferrite fritté obtenu selon le procédé de fabrication d'un matériau ferrite fritté selon la revendication 3.

5. Déphaseur comprenant un matériau ferrite fritté obtenu selon le procédé de fabrication d'un matériau ferrite fritté selon la revendication 3.

**Patentansprüche**

1. Ferritmaterial, **dadurch gekennzeichnet, dass** es der folgenden chemischen Formel entspricht: (100-x) ($Li_a$ $Mn_b$ $Ti_c$ $Zn_d$ $Co_e$ $Cu_f$ $Al_g$ $Ni_h$ Mg; $Fe_j$ $O_{4+y}$) + x (von Flussmittel oder einer Mischung von Flussmitteln aus $Bi_2O_3$ oder $V_2O_5$ oder $B_2O_3$ oder CuO oder CaO oder $Na_2O$ oder $SiO_2$ oder $P_2O_5$), wobei x ein molarer Prozentsatz ist und $0 < x < 10$, wobei:

$$-0,02 < \gamma < 0,02$$

$$0 < a \leq 0,5$$

$$0 < b \leq 0,2$$

$$0 < c \leq 0,1$$

$$0 \leq d \leq 0,25$$

$$0 < e \leq 0,05$$

$$0,01 \leq f \leq 0,2$$

$$0 \leq g \leq 0,1$$

$$0 \leq h < 0,1$$

$$0 \leq i < 0,1$$

$$0 < j < 2,4$$

2. Ferritmaterial nach Anspruch 1, wobei das Flussmittel $Bi_2O_3$ ist und der Anteil von $Bi_2O_3$ zwischen 0,3 und 0,5 Gew.-% liegt.

3. Verfahren zum Herstellen eines gesinterten Ferritmaterials, umfassend:

- das Wiegen von Rohmaterialien;
- ein erstes Zerkleinern der Rohmaterialien;

- einen Schritt zum Kalzinieren der zerkleinerten Rohmaterialien, um ein rohes Ferritmaterial zu erhalten, das der folgenden chemischen Formel entspricht:

$$Li_a\ Mn_b\ Ti_c\ Zn_d\ Co_e\ Cu_f\ Al_g\ Ni_h\ Mg;\ Fe_j\ O_{4+\gamma},$$

wobei:

$$-0,02 < \gamma < 0,02$$

$$0 < a \leq 0,5$$

$$0 < b \leq 0,2$$

$$0 < c \leq 0,1$$

$$0 \leq d \leq 0,25$$

$$0 < e \leq 0,05$$

$$0,01 \leq f \leq 0,2$$

$$0 \leq g \leq 0,1$$

$$0 \leq h < 0,1$$

$$0 \leq i < 0,1$$

$$0 < j < 2,4$$

- das Zugeben eines Flussmittels oder einer Mischung von Flussmitteln von $Bi_2O_3$ oder $V_2O_5$ oder $B_2O_3$ oder CuO oder CaO oder $Na_2O$ oder $SiO_2$ oder $P_2O_5$;
- einen Sintervorgang.

4. Schalter, umfassend ein gesintertes Ferritmaterial, das nach dem Verfahren zum Herstellen eines gesinterten Ferritmaterials nach Anspruch 3 erhalten wurde.

5. Phasenverschieber, umfassend ein gesintertes Ferritmaterial, das nach dem Verfahren zum Herstellen eines gesinterten Ferritmaterials nach Anspruch 3 erhalten wurde.

**Claims**

1. A ferrite material, **characterised in that** it has the following chemical formula: (100-x) ($Li_a\ Mn_b\ Ti_c\ Zn_d\ Co_e\ Cu_f\ Al_g\ Ni_h\ Mg_i\ Fe_j\ O_{4+\gamma}$) + x (with a flux or a mixture of fluxes of $Bi_2O_3$ or $V_2O_5$ or $B_2O_3$ or Cu0 or CaO or $Na_2O$ or $SiO_2$ or $P_2O_5$) with x being a molar percentage and 0 < x < 10, with:

$$-0.02 < \gamma < 0.02$$

$$0 < a \leq 0.5$$

$$0 < b \leq 0.2$$

$$0 < c \leq 0.1$$

$$0 \leq d \leq 0.25$$

$$0 < e \leq 0.05$$

$$0.01 \leq f \leq 0.2$$

$$0 \leq g \leq 0.1$$

$$0 \leq h < 0.1$$

$$0 \leq i < 0.1$$

$$0 < j < 2.4$$

2. The ferrite material according to claim 1, wherein the flux is $Bi_2O_3$ and the proportion of $Bi_2O_3$ is between 0.3 and 0.5 % by weight.

3. A method for manufacturing a sintered ferrite material, comprising:

- weighing raw materials;
- a first milling of said raw materials;
- a step of calcinating said milled raw materials in order to obtain a raw ferrite material with the following chemical formula:

$$Li_a \, Mn_b \, Ti_c \, Zn_d \, Co_e \, Cu_f \, Al_g \, Ni_h \, Mg_i \, Fe_j \, O_{4+\gamma},$$

with:

$$-0.02 < \gamma < 0.02$$

$$0 < a \leq 0.5$$

$$0 < b \leq 0.2$$

$$0 < c \leq 0.1$$

$$0 \leq d \leq 0.25$$

$$0 < e \leq 0.05$$

$$0.01 \leq f \leq 0.2$$

$$0 \leq g \leq 0.1$$

$$0 \leq h < 0.1$$

$$0 \leq i < 0.1$$

$$0 < j < 2.4$$

- adding a flux or a mixture of fluxes of $Bi_2O_3$ or $V_2O_5$ or $B_2O_3$ or Cu0 or CaO or $Na_2O$ or $SiO_2$ or $P_2O_5$;
- a sintering operation.

4. A switch comprising a sintered ferrite material obtained according to the method for manufacturing a sintered ferrite material according to claim 3.

5. A phase-shifter comprising a sintered ferrite material obtained according to the method for manufacturing a sintered ferrite material according to claim 3.

Figure 1

Figure 2

Figure 3

## RÉFÉRENCES CITÉES DANS LA DESCRIPTION

**Documents brevets cités dans la description**

- CN 109437879 A

- FR 2426031 A1

**Littérature non-brevet citée dans la description**

- **ULRICH HOEPPE.** Smart measurement setup for spin-wave linewidth ∆Hk. *Magnetics, IEEE Transactions on,* Septembre 2002, vol. 38 (5), 3126-3128